# EUROPEAN PATENT SPECIFICATION

(11) **EP 3 043 173 B1**
(45) Date of publication and mention of the grant of the patent: **06.09.2017**
(21) Application number: 15150715.9
(22) Date of filing: 09.01.2015
(51) Int. Cl.: G01N 27/414

(54) **A humidity sensor**
Feuchtigkeitssensor
Capteur d'humidité

(43) Date of publication of application: 13.07.2016
(73) Proprietor: Honeywell International Inc., Morris Plains, NJ 07950 (US)
(72) Inventor: Cobianu, Cornel, Morristown, NJ New Jersey 07962-2245 (US); Serban, Bogdan, Morristown, NJ New Jersey 07962-2245 (US); Bostan, Cazimir, Morristown, NJ New Jersey 07962-2245 (US); Costea, Stefan Dan, Morristown, NJ New Jersey 07962-2245 (US); Buiu, Octavian, Morristown, NJ New Jersey 07962-2245 (US); Stratulat, Alisa, Morristown, NJ New Jersey 07962-2245 (US); Brezeanu, Mihai, Morristown, NJ New Jersey 07962-2245 (US)
(74) Representative: Houghton, Mark Phillip

(56) References cited:
- DE-A1- 10 036 178
- US-A1- 2011 303 953
- SUNG PIL LEE ET AL: "CMOS Humidity Sensor System Using Carbon Nitride Film as Sensing Materials", SENSORS, vol. 8, no. 4, 14 April 2008 (2008-04-14), pages 2662-2672, XP055196837, ISSN: 1424-8220, DOI: 10.3390/s8042662
- "Precision Instrumentation Amplifier AD524, Rev. E", , 1 January 1999 (1999-01-01), pages 1-16, XP055197721, USA Retrieved from the Internet: URL:http://people.duke.edu/~hpgavin/ce281/ AD524.pdf [retrieved on 2015-06-23]
- CHEN ET AL: "Humidity Sensors: A Review of Materials and Mechanisms", SENSOR LETTERS, AMERICAN SCIENTIFIC PUBLISHERS, US, vol. 3, 1 January 2005 (2005-01-01), pages 274-295, XP009128208, ISSN: 1546-198X, DOI: 10.1166/SL.2005.045

## Description

### Background

The present disclosure relates to sensors and particularly to humidity sensors.

Sung Pil Lee *et al.* describes an integrated humidity sensor system with nano-structured carbon nitride film as humidity sensing material which is fabricated by a 0.8µm analog mixed CMOS process. The integrated sensor system consists of differential humidity sensitive field effect transistors (HUSFET), temperature sensor and operational amplifier. The process contains two poly, two metal and twin well technology. To form CNₓ film on Si₃N₄/Si substrate, plasma etching is performed to the gate area as well as trenches. CNₓ film is deposited by reactive RF magnetron sputtering method and patterned by the lift-off technique. [Sung Pil Lee et al.: " CMOS Humidity Sensor System using Carbon Nitride Film as Sensing Materials", Sensors, vol. 8, no. 4, 14 April 2008, pages 2662-2672].

Patent document number US2011/303953A1 describes gas sensor having a first transistor which includes an oxide semiconductor layer in contact with a gas. This first transistor serves as a detector element of a gas sensor. A second transistor includes an oxide semiconductor layer in contact with a film having a gas barrier property, which forms a detection circuit formed over one substrate by the same process.

Chen *et al.* provides a review of humidity sensors based on various materials for bot relative and absolute humidity, including ceramic, semiconducting and polymer materials. [Chen et al.: "Humidity Sensors: A Review of Materials and Mechanisms", Sensor Letters, American Scientific Publishers, US, vol. 3, 1 January 2005, pages 274-295].

### Summary

The present invention in its various aspects is as set out in the appended claims. This disclosure reveals an ambient humidity sensor having a sensing component and a reference component. Each component may indicate humidity by using a MOSFET transistor that has a stacked gate dielectric containing an upper layer with a dielectric constant which varies according to exposure to a change of moisture. The sensing component may have its dielectric exposed to an ambient environment. The reference component may have the same stacked gate dielectric layer, but having an absence of exposure to any environment. Dielectric constant outputs from the components may be processed with differential electronics to provide an output to indicate humidity in the ambient environment.

Differential processing may reflect an output having a high common mode rejection ratio. An example of an upper gate dielectric layer may be a hydrophobic polymer material. Other like materials may instead be used. The components and processing electronics may be transistor circuits fabricated with integrated circuit technology.

### Brief Description of the Drawing

Figure 1 is a diagram of an illustrative cross-section of an exemplary humidity sensor; and
Figure 2 is a diagram of an illustrative schematic of electronics associated an exemplary humidity sensor.

### Description

The present system and approach may incorporate one or more processors, computers, controllers, user interfaces, wireless and/or wire connections, and/or the like, in an implementation described and/or shown herein.

This description may provide one or more illustrative and specific examples or ways of implementing the present system and approach. There may be numerous other examples or ways of implementing the system and approach.

Humidity sensors may be used for process control in industrial applications, and for ambient air quality monitoring in homes and offices. Relative humidity (RH) sensors for cell phone and other mobile applications may become an emerging technology, within the existing trend of adding more functions to the portable applications.

Extensive use of humidity sensors in such application domains may become possible due to miniaturization and incorporation of sensor technology to silicon integrated circuits. Capacitive sensing principle extended at the level of a MOSFET transistor may be used in the present humidity sensor. The sensor and the associated electronics may be integrated on the same chip, having a MOSFET transistor with, for instance, platinum gate electrodes and a polyimide dielectric as one layer of a gate dielectric stack. At the heart of a MOSFET transistor based humidity sensor may be the stacked gate dielectric layer that has an upper gate dielectric layer with a dielectric constant that varies as a function of an amount of adsorbed and absorbed water, which is deposited over a lower gate dielectric layer.

The present humidity sensor may have good drift behavior due to an use of differential sensing, wherein field effect transistors (FETs), that can perform sensing and signal conditioning, by directly providing a drain current change as a function of humidity change in the ambient environment. A sensing FET and a reference FET, both having an associated stacked dielectric gate insulator layer may incorporate the same material, that is, an upper hydrophobic polymeric dielectric layer deposited over a lower gate insulator layer may be used where a difference between the sensing FET and reference FET lies in gate metallization for the sensing FET, which can be porous so that ambient humidity can easily permeate through the pores in the metal layer to reach the sensing polymer, while the reference FET gate metallization can be nonporous and prevent ambient humidity from reaching the polymeric dielectric. The metal layers of the FET gates may form output contacts for the respective reference and sensing FETs. External humidity may change the gate capacitance and thus the threshold voltage of the sensing FET, while the threshold voltage for the reference FET may remain unchanged. In the presence of ambient humidity, for the same gate voltage and source voltage applied to both reference and sensing FET, just the drain current and output voltage of the sensing FET should change. Therefore, a difference between the output voltage from the sensing FET and the output voltage from reference FET may provide a signal that is proportional to the ambient humidity. This arrangement may provide an added advantage of cancelling the ageing and temperature effects.

For an accurate reading of a voltage difference, an electronic signal amplifier may be used. The present sensor may incorporate a differential circuit for humidity detection. The outputs from the sensing FET and reference FET may be connected to an instrumentation amplifier that has, for example, three operational amplifiers that can provide a high common mode rejection ratio (CMRR) of greater than 50 dB.

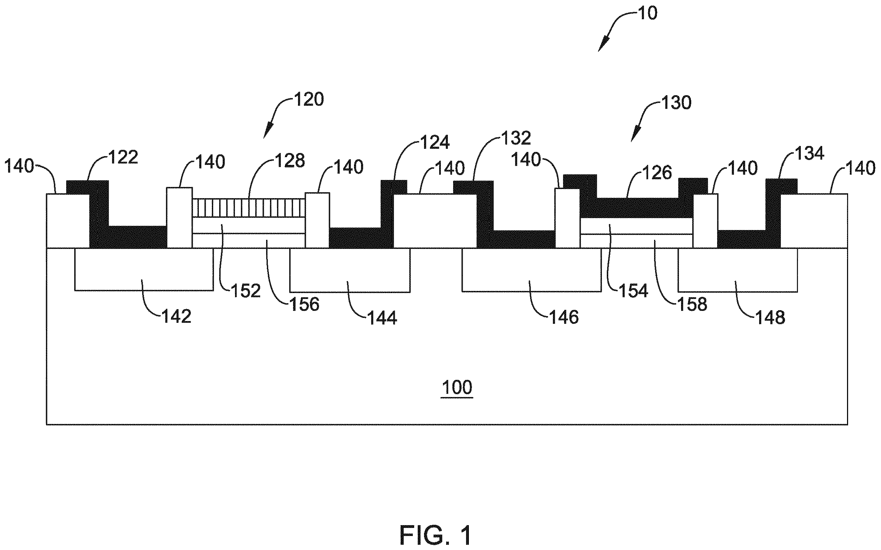

Figure 1 is a diagram of an exemplary humidity sensor 10 that may be formed on a p-type silicon substrate 100. Sensor 10 may have a sensing field effect transistor (FET) 120 and a reference field effect transistor 130. FETs 120 and 139 are n-channel FETs. However, sensor 10 may use p-channel FETs.

Each of sensing and reference n-channel FETs 120 and 130 may have an n-type source 142 and 146, an n-type drain 144 and 148, and a lower gate dielectric layer consisting of a thermally grown thin layer of SiO₂ 156 and 158 bridging n-type source 142 and 146, and n-type drain 144 and 148, respectively.

There may be layers of upper gate dielectric of hydrophobic dielectric polymer 152 and 154 covering lower gate dielectric of thin layers of SiO₂ 156 and 158, respectively, of sensing and reference FETs 120 and 130. Sensing and reference FETs 120 and 130 may incorporate relatively thick layers 140 of SiO₂ which define cavities associated with the FETs, as well as aluminum source contact electrodes 122 and 132 and aluminum drain contact electrodes 124 and 134, respectively, as indicated in Figure 1. In addition, reference FET 130 may be covered and sealed by a dense metal layer 126 forming a gate electrode of that FET. Sensing FET 120 may be covered by a porous metal layer 128 forming a gate electrode of that FET. The metal of gate electrodes 126 and 128 may be formed from platinum or gold.

In reference FET 130, the gate dielectric stack of upper hydrophobic polymer layer 154 and lower thin SiO₂ layer 158 may be fully enclosed by p-type silicon substrate 100, associated thick SiO₂ layer 140, and dense metal layer 126 forming the gate electrode of reference FET 130.

The structure of the sensing FET 120 may be similar to reference FET 130 in that the gate dielectric stack of upper hydrophobic polymer layer 152 and lower thin SiO₂ layer 156 can be virtually fully enclosed by p-type silicon substrate 100, associated thick SiO₂ layer 140 and porous metal layer 128 forming the gate electrode of the sensing FET; however, porous metal layer 128 of the sensing FET 120 may allow water vapor to be exchanged between the hydrophobic polymer layer 152 and the ambient atmosphere.

Hydrophobic dielectric polymers as upper gate dielectric layers suitable for the present device may be used with many FET technologies as components of, for example, n-MOS, p-MOS, or CMOS FETs in the present FET-based humidity sensor. Suitable hydrophobic dielectric polymers may be selected from among many polyimides and polysulfones and may incorporate aromatic polyimides and polysulfones and/or cross-linked polyimides and polysulfones. When the polyimides or polysulfones are cross-linked polyimides or polysulfones, the cross-linking moiety usefully may be one of the group consisting of 2,2,3,3,4,4,5,5-octafluoro-1,6-hexanediol; 1,5-pentanediol; 1,10-decanediol; and 1,4-benzenedimethanol. Cross-linking may be accomplished by esterification with pendant carboxylic acid groups of the polyimides or polysulfones.

As non-limiting examples of hydrophobic polymers suitable for the present device, the following polymers may be prepared and used to construct the present humidity sensor; 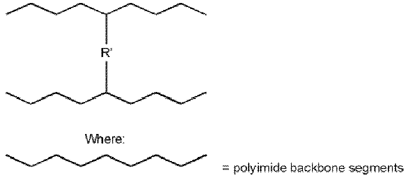 and an exemplary polyimide backbone segment may be 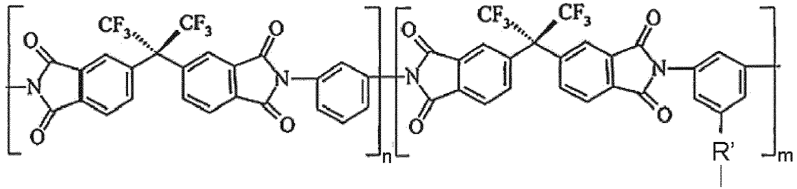 where R' is selected from:
-O₂CCH₂(CF₂)₄CH₂CO₂-; -O₂C(CH₂)₅CO₂-; -O₂C(CH₂)₁₀CO₂-;
and -O₂CCH₂(C₆H₄)CH₂CO₂-.

As well as polysulfones such as: 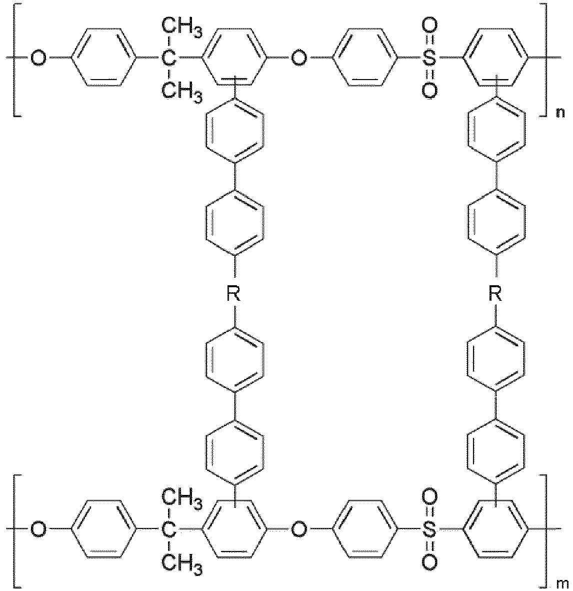 where R is selected from:
-O₂CCH₂(CF)₄CH₂CO₂-; -O₂C(CH₂)₅CO₂-; -O₂C(CH₂)₁₀CO₂-;
and -O₂CCH₂(C₆H₄)CH₂CO₂-.

Exemplary upper hydrophobic polymer gate dielectric layers 152 and 154 may be applied to the lower thermally grown silicon dioxide layers 156 and 158 of the stacked gate dielectric structures by spin coating and subsequently thermally treated at temperatures up to 400 degrees C. Other application approaches and conditions may be contemplated. Patterning of the hydrophobic polymer layers 152 and 154 may be carried out by photoresist/etching processes although masked deposition may be used. The introduction of porosity into the deposited hydrophobic polymer layers may allow the sensing hydrophobic polymer layer to be more responsive to changes in ambient humidity. Similarly, excessively thick hydrophobic layers may tend to slow response of the FET sensor to changes in ambient humidity by delaying full equilibration.

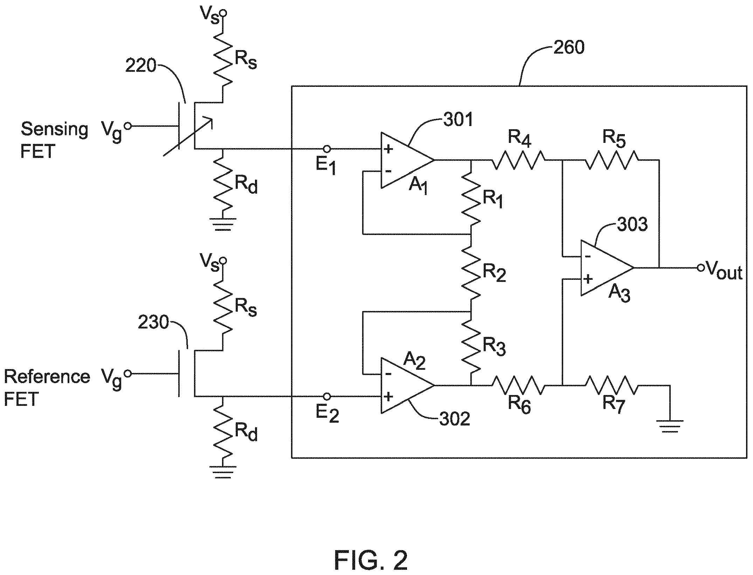

Figure 2 is a diagram of circuitry for the present humidity sensor FET elements. The circuitry may differentially amplify signals of the sensing FET 220 and the reference FET 230 to form a differential humidity sensor. Reference numeral 260 may indicate a circuit or an instrumentation amplifier incorporating three operational amplifiers 301, 302 and 303 connected to produce a high common mode rejection ratio (CMRR) of greater than 50 dB. Circuit 260 may be designed to interface with p-channel FETs and/or n-channel FETs.

In Figure 2, E₁ and E₂ denote output voltages of the sensing FET 220 and the reference FET 230, respectively. The resistors R₁-R₇ may be selected to satisfy the conditions of R₅/R₄ = R₇/R₆ = k and 2*(R₁/R₂) = 2*(R₃/R₂) = G such that R₁ = R₃, resulting in an output voltage Vₒᵤₜ = -k(G+1)*E₁-E₂) = A_{d}*(E₁-E₂), while the common mode rejection ratio (CMRR) approaches infinity and the common mode gain may be theoretically zero and actually virtually zero. Differential gain A_{d} may be changed from an R₂ change without affecting the CMRR.

The differential approach (Vₒᵤₜ = A_{d}*(E₁-E₂) may minimize sensor drift by subtracting the common mode signals coming from effects of temperature, polymer ageing, and electronic noise.

The value of voltage E₁ may be different from E₂, due to the water vapor absorption in the polyimide of the sensing FET. Such water vapor may increase the dielectric constant of the polyimide capacitance, and thus also change the threshold voltage of the sensing FET, and finally, it may change the drain current. The water vapor will not necessarily enter the reference FET, so the E₂ voltage value may follow the changes due to common mode signals (e.g., temperature, ageing, noise).

Differential amplification of the signals produced by the sensing FET and reference FET may be implemented on the same chip as the sensing and reference FETs, may be implemented on a different chip from that upon which the sensing and reference FETs are formed, or may be provided by a separate device provided by a supplier such as Texas Instruments Incorporated, Analog Devices, Inc. (e.g., 8221) and the like. Alternate technologies and substrates may be employed to produce a FET-based differential humidity sensor, such as n-MOS, p-MOS, CMOS, and so on, in which an upper hydrophobic polymer gate dielectric layer may be applied to the lower gate insulator layer and subsequently covered with a water vapor impermeable or permeable metal layer to form a reference FET and a sensing FET, respectively.

A portion of a silicon chip containing sensing and reference FETs may incorporate source and drain contacts being of an aluminum layer, a porous metal electrode of an ultra-thin gold or platinum layer of about 50-100 nm prepared by sputtering and lift-off technology, a dense metal electrode of a thick gold or platinum layer of about 0.7-1 µm prepared by sputtering and lift-off technology, a thick layer of about 1.5-2 µm of SiO₂ grown by thermal oxidation of silicon substrate, a thin layer of about 0.2-0.3 µm of SiO₂ grown by thermal oxidation of silicon substrate (lower gate dielectric layer), a polyimide such as a polymeric sensing layer 0.2-1 µm (upper gate dielectric layer)like the ones described herein deposited by spin coating and finally treated at 400 degrees C. in N₂.

Further, the present humidity sensor may be fabricated using various techniques. For example, a thick (1.5 to 2 microns) thermal silicon oxide layer may be formed on a p-type silicon substrate followed by selective etching of the thermal silicon oxide to form windows. Phosphorus atoms may then be implanted/diffused into the substrate to create n-doped regions forming the sources and drains of the reference and sensing FETs. A lower gate dielectric layer of silicon dioxide, or other appropriate gate insulator material, may then be thermally grown over the substrate followed by masking and etching to define channel regions. Growth of a thin silicon dioxide gate insulator layer, or other appropriate gate insulator material, may form the lower gate dielectric layer and assure a good surface state density at the silicon-silicon dioxide interface. One of the suitable hydrophobic polymers identified herein may then be applied as upper gate dielectric layer over the thin silicon dioxide gate insulator layer, or other appropriate gate layer material, e.g., by spin coating and drying/heating. The polymer layer may be soft baked in air at 90-120°C and then be photoresist patterned to define the hydrophobic polymer layer of the gate insulator stack before curing it at up to 400 degrees C in a dry nitrogen atmosphere. Additional photoresist and patterning steps (like in lift-off technology) may be used to prepare the substrate for application by sputtering of a porous metal (e.g., gold) layer over the hydrophobic polymer layer of the gate insulator of the sensing field effect transistor and of a thick dense metal (gold) layer over the hydrophobic polymer layer of the gate of the reference field effect transistor. The deposition of the metal layers, which may be platinum instead of gold, together with other elements of the FETs, may complete encapsulation of the hydrophobic polymer such that in the reference FET the upper hydrophobic polymer gate dielectric is sealed to prevent moisture from reaching the polymer. The encapsulation of the hydrophobic polymer by the components of the sensing FET may be similar; however, the porous metal layer may allow moisture to be exchanged between the hydrophobic polymer and the ambient atmosphere. In some instances, a thin layer of chromium may be deposited prior to the application of the gate metal layer to improve adhesion thereof. Sputtering and patterning of an aluminum layer for contacting the source, drain, and gate electrodes may complete the fabrication of the reference and sensing FETs.

One or more of these steps may be modified if it is desirable to employ FETs implemented using different technologies, for example, n-MOS, p-MOS, CMOS, and so on. Similarly, one or more additional process steps may be employed if it is desirable to fabricate an instrumentation amplifier on the same substrate.

Subsequently, a first input of an instrumentation amplifier may be connected to the output of the sensing field effect transistor, and a second input of the instrumentation amplifier may be connected to the output of the reference field effect transistor. The instrumentation amplifier may incorporate three operational amplifiers connected to produce a high common mode rejection ratio (CMRR) greater than 50 dB, as illustrated in Figure 2.

To recap, a humidity sensor may incorporate a substrate, a reference field effect transistor, and a sensing field effect transistor. The reference field effect transistor may incorporate a source formed on the substrate, a drain formed on the substrate, a gate, a lower gate dielectric layer which covers at least a portion of the source and at least a portion of the drain as well as the substrate therebetween, and an upper dielectric layer of a hydrophobic polymer that overlies the lower gate insulator layer.

The layer of hydrophobic polymer of the reference field effect transistor may be covered by a layer impermeable to water vapor. The gate may incorporate the layer impermeable to water vapor. The sensing field effect transistor may further incorporate a source formed on the substrate, a drain formed on the substrate, a gate, a lower gate insulator layer which covers at least a portion of the source and at least a portion of the drain as well as the substrate therebetween, and an upper gate dielectric layer of a hydrophobic polymer that overlies the lower gate insulator layer.

The layer of hydrophobic polymer of the sensing field effect transistor may be covered by a layer permeable to water vapor. The gate may incorporate the layer permeable to water vapor.

The upper hydrophobic polymer overlying the lower gate insulator layers of the reference field effect transistor and the sensing field effect transistor may be a reaction product of a polysulfone with bis(pinacolato)diboron and diterbutylbipyridine in a presence of an iridium catalyst followed by reaction with 4-formyl-4'-bromo diphenyl in a presence of a palladium catalyst followed by mild oxidation and crosslinking with octofluorohexanediol.

The sensor may further incorporate an instrumentation amplifier having a first input connected to an output of the reference field effect transistor and having a second input connected to an output of the sensing field effect transistor.

The instrumentation amplifier may incorporate three operational amplifiers configured as a differential amplifier having a common mode rejection ratio greater than 50 dB.

The upper dielectric hydrophobic polymer layer overlying the lower gate insulator layer of the reference field effect transistor and the sensing field effect transistor, may be a polyimide.

The upper dielectric polyimide layer overlying the lower gate insulator layer may be an aromatic polyimide.

The upper hydrophobic polymer layer overlying the lower gate insulator layers of the reference field effect transistor and the sensing field effect transistor may be a polysulfone.

The upper dielectric hydrophobic polymer layer overlying the lower gate insulator layers of the reference field effect transistor and the sensing field effect transistor may be an aromatic polysulfone.

The upper dielectric hydrophobic polymer layer overlying the lower gate insulator layers of the reference field effect transistor and the sensing field effect transistor may be a cross-linked hydrophobic polymer.

The cross-linked hydrophobic polymer layer may be cross-linked with one member selected from a group consisting of 2,2,3,3,4,4,5,5-*octafluoro*-1,6-*hexanediol; 1,5-pentanediol; 1,10-decanediol; and 1,4-benzenedimethanol.*

The metal gate incorporating the layer impermeable to water vapor covering the dielectric hydrophobic polymer layer of the reference field effect transistor and the metal gate having the layer permeable to water vapor covering the dielectric hydrophobic polymer layer of the sensing field effect transistor, respectively, may have a material selected from a group consisting of platinum and gold.

A humidity sensor may incorporate a reference component having an upper gate dielectric layer that has a constant that changes according to a change of moisture and has an absence of exposure to any environment, and has an output that indicates a value of the constant; a sensing component having an upper gate dielectric layer that has a constant that changes according to a change of moisture and has an exposure to an ambient environment, and has an output that indicates a value of the constant; and an instrumentation amplifier having a first input connected to the output of the reference component and having a second input connected to the output of the sensing component, where the instrumentation amplifier may be configured as a differential amplifier having an output indicative of humidity in the ambient environment.

The reference component may incorporate a first electrode region formed in a doped substrate, a second electrode region formed in the doped substrate, a lower gate insulator layer covering at least a portion of the first electrode region and at least a portion of the second electrode region as well as the undoped substrate therebetween; an upper gate dielectric layer of a hydrophobic polymer situated on the lower gate insulator layer; a third metal electrode incorporating a layer of metal formed on the upper gate dielectric layer the hydrophobic polymer resulting in the layer of the hydrophobic polymer having an absence of exposure to any environment impermeable to water vapor. The upper gate dielectric layer of a hydrophobic polymer may be the dielectric of the reference component.

The sensing component may incorporate a first electrode region formed in the doped substrate; a second electrode region formed in the doped substrate; a lower gate insulator layer covering at least a portion of the first electrode region and at least a portion of the second electrode region as well as the undoped substrate therebetween; an upper gate dielectric layer of a dielectric hydrophobic polymer situated on the lower insulator layer; and a third electrode having a layer of metal formed on the layer the hydrophobic polymer resulting in the upper gate dielectric layer of the hydrophobic polymer having exposure to the ambient environment. The upper gate dielectric layer of the dielectric hydrophobic polymer may be the sensing dielectric of the sensing component.

The reference component may be a field effect transistor having the first electrode region as a drain, the second electrode region as a source, and the third electrode as a gate. The sensing component may be a field effect transistor having the first electrode region as a drain, the second electrode region as a source, and the third electrode as a gate. The upper gate dielectric layer of the dielectric hydrophobic polymer of the reference field effect transistor and of the sensing field effect transistor may incorporate at least one of a polyimide and a polysulfone which has been cross-linked using one member of a group consisting of 2,2,3,3,4,4,5,5-*octafluoro*-1,6-*hexanediol; 1,5 pentanediol; 1,10-decanediol; and 1,4-benzenedimethanol.*

An approach of constructing a humidity sensor may incorporate steps of: forming a reference field effect transistor on a substrate; forming a sensing field effect transistor on a substrate, where the reference field effect transistor and the sensing field effect transistor each may have a source and a drain; depositing contact electrodes to each source and drain of the reference field effect transistor and the sensing field effect transistor; growing a lower gate insulator layer which bridges and at least partially covers the source and drain of the reference field effect transistor; depositing an upper gate insulator layer which bridges and at least partially covers the source and drain of the sensing field effect transistor, where the reference field effect transistor and the sensing field effect transistor each further incorporates a dielectric hydrophobic polymer layer selected from a group consisting of a polyimide and a polysulfone, the hydrophobic polymer layer covers the lower gate insulator layer which bridges and at least partially covers the source and drain of the respective reference field effect transistor and sensing field effect transistor; encapsulating the hydrophobic polymer layer of the reference field effect transistor with a moisture impermeable gate metal layer; encapsulating the hydrophobic polymer layer of the sensing field effect transistor with a moisture permeable gate metal layer; and connecting a first input of an instrumentation amplifier to an output of the reference field effect transistor and connecting a second input of the instrumentation amplifier to an output of the sensing field effect transistor, where the instrumentation amplifier has a common mode rejection ratio greater than 50 dB.

All publications and patents noted herein are incorporated by reference to the same extent as if each individual publication or patent was specifically and individually indicated to be incorporated by reference.

In the present specification, some of the matter may be of a hypothetical or prophetic nature although stated in another manner or tense.

Although the present system and/or approach has been described with respect to at least one illustrative example, many variations and modifications will become apparent to those skilled in the art upon reading the specification. It is therefore the intention that the appended claims be interpreted as broadly as possible in view of the related art to include all such variations and modifications.

## Claims

1. A humidity sensor (10) comprising:
a substrate (100);
a reference field effect transistor (130); and
a sensing field effect transistor (120); and
wherein:
the reference field effect transistor (130) comprises:
a source (146) formed on the substrate;
a drain (148) formed on the substrate;
a gate (126);
a lower gate dielectric layer (158) which covers at least a portion of the source and at least a portion of the drain as well as the substrate therebetween; and
an upper gate dielectric layer (154) of a hydrophobic polymer that overlies the lower gate insulator layer (158); and
wherein:
the layer of hydrophobic polymer of the reference field effect transistor is covered by a layer (126) impermeable to water vapor; and
the gate comprises the layer (126) impermeable to water vapor; and
the sensing field effect transistor (120) further comprises:
a source (142) formed on the substrate;
a drain (144) formed on the substrate;
a gate (128);
a lower gate insulator layer (156) which covers at least a portion of the source and at least a portion of the drain as well as the substrate therebetween; and
an upper gate dielectric layer (152) of a hydrophobic polymer that overlies the lower gate insulator layer; and
wherein:
the layer of hydrophobic polymer of the sensing field effect transistor is covered by a layer (128) permeable to water vapor; and
the gate (128) comprises the layer permeable to water vapor.

2. The sensor of claim 1, wherein the upper hydrophobic polymer layer overlying the lower gate insulator layers of the reference field effect transistor and the sensing field effect transistor is a reaction product of a polysulfone with bis(pinacolato)diboron and diterbutylbipyridine in a presence of an iridium catalyst followed by reaction with 4-formyl-4'-bromo diphenyl in a presence of a palladium catalyst followed by mild oxidation and crosslinking with octofluorohexanediol.

3. The sensor of claim 1, further comprising an instrumentation amplifier (260) having a first input connected to an output of the reference field effect transistor and having a second input connected to an output of the sensing field effect transistor.

4. The sensor of claim 3, wherein the instrumentation amplifier comprises three operational amplifiers configured as a differential amplifier having a common mode rejection ratio greater than 50 dB.

5. The sensor of any of claims 1, 3 or 4, wherein the upper dielectric hydrophobic polymer layer overlying the lower gate insulator layer of the reference field effect transistor and the sensing field effect transistor, is a polyimide.

6. The sensor of claim 5, wherein the upper dielectric polyimide layer overlying the lower gate insulator layer is an aromatic polyimide.

7. The sensor of any of claims 1, 3 or 4, wherein the upper hydrophobic polymer layer overlying the lower gate insulator layers of the reference field effect transistor and the sensing field effect transistor is a polysulfone.

8. The sensor of claim 7, wherein the upper dielectric hydrophobic polymer layer overlying the lower gate insulator layers of the reference field effect transistor and the sensing field effect transistor is an aromatic polysulfone.

9. The sensor of claim 1, wherein the upper dielectric hydrophobic polymer layer overlying the lower gate insulator layers of the reference field effect transistor and the sensing field effect transistor is a cross-linked hydrophobic polymer.

10. The sensor of claim 9, wherein the cross-linked hydrophobic polymer is cross-linked with one member selected from a group consisting of 2,2,3,3,4,4,5,5-octafluoro-1,6-hexanediol; 1,5-pentanediol; 1,10-decanediol; and 1,4-benzenedimethanol.

11. The sensor of claim 1, wherein the gate comprising the layer impermeable to water vapor covering the upper gate dielectric hydrophobic polymer layer of the reference field effect transistor and the gate comprising the layer permeable to water vapor covering the upper gate dielectric hydrophobic polymer layer of the sensing field effect transistor, respectively, have a material selected from a group consisting of platinum and gold.

12. The sensor of claim 1 wherein
the upper gate dielectric layer has a constant that changes according to a change of moisture and has an absence of exposure to any environment, and has an output that indicates a value of the constant; and wherein
the upper gate dielectric layer has a constant that changes according to a change of moisture and has an exposure to an ambient environment, and has an output that indicates a value of the constant.

13. A method of constructing a humidity sensor (10) comprising steps of:
forming a reference field effect transistor (130) on a substrate (100); forming a sensing field effect transistor (120) on a substrate (100), wherein the reference field effect transistor (130) and the sensing field effect transistor (120) each comprise a source (146,142) and a drain (148,144);
depositing contact electrodes (122,124,132,134) to each source and drain of the reference field effect transistor and the sensing field effect transistor;
growing a lower gate dielectric layer (158) which bridges and at least partially covers the source (146) and drain (148) of the reference field effect transistor (130);
depositing a lower gate dielectric layer (156) which bridges and at least partially covers the source and drain of the sensing field effect transistor, wherein the reference field effect transistor and the sensing field effect transistor each further comprise an upper gate dielectric hydrophobic polymer layer (154,152) selected from a group consisting of a polyimide and a polysulfone, the upper gate dielectric hydrophobic polymer layer covers the lower gate dielectric layer (158,156) which bridges and at least partially covers the source and drain of the respective reference field effect transistor and sensing field effect transistor;
encapsulating the upper gate dielectric hydrophobic polymer layer of the reference field effect transistor with a moisture impermeable gate metal layer (126); encapsulating the upper gate dielectric hydrophobic polymer layer of the sensing field effect transistor with a moisture permeable gate metal layer (128); and
connecting a first input of an instrumentation amplifier (260) to an output of the reference field effect transistor and connecting a second input of the instrumentation amplifier to an output of the sensing field effect transistor, wherein the instrumentation amplifier has a common mode rejection ratio greater than 50 dB.

## Patentansprüche

1. Feuchtigkeitssensor (10), umfassend:
ein Substrat (100);
einen Referenz-Feldeffekttransistor (130); und
einen Mess-Feldeffekttransistor (120); und
wobei:
der Referenz-Feldeffekttransistor (130) Folgendes umfasst:
eine auf dem Substrat ausgebildete Source (146);
einen auf dem Substrat ausgebildeten Drain (148);
ein Gate (126);
eine untere Gatedielektrikumsschicht (158), die mindestens einen Abschnitt der Source und mindestens einen Abschnitt des Drains sowie das Substrat dazwischen bedeckt; und
eine obere Gatedielektrikumsschicht (154) aus einem hydrophoben Polymer, die über dem unteren Gateisolator (158) liegt; und
wobei:
die Schicht aus hydrophobem Polymer des Referenz-Feldeffekttransistors durch eine für Wasserdampf undurchlässige Schicht (126) bedeckt ist; und
das Gate die für Wasserdampf undurchlässige Schicht (126) umfasst; und
der Mess-Feldeffekttransistor (120) weiterhin Folgendes umfasst:
eine auf dem Substrat ausgebildete Source (142);
ein auf dem Substrat ausgebildetes Drain (144);
ein Gate (128) ;
eine untere Gateisolatorschicht (156), die mindestens einen Abschnitt der Source und mindestens einen Abschnitt des Drains sowie das Substrat dazwischen bedeckt; und
eine obere Gatedielekrikumsschicht (152) aus einem hydrophoben Polymer, die über der unteren Gateisolatorschicht liegt; und
wobei:
die Schicht aus hydrophobem Polymer des Mess-Feldeffekttransistors durch eine für Wasserdampf durchlässige Schicht (128) bedeckt ist; und
das Gate (128) die für Wasserdampf durchlässige Schicht (128) umfasst.

2. Sensor nach Anspruch 1, wobei die über der unteren Gateisolatorschicht des Referenz-Feldeffekttransistors und des Mess-Feldeffekttransistors liegende obere hydrophobe Polymerschicht ein Reaktionsprodukt von einem Polysulfon mit Bis(pinacolato)dibor und die Diterbutylbipyridin in Anwesenheit eines Iridiumkatalysators gefolgt von einer Reaktion mit 4-Formyl-4'-bromdiphenyl in Anwesenheit eines Palladiumkatalysators gefolgt von einer milden Oxidation und Vernetzen mit Octofluorhexandiol ist.

3. Sensor nach Anspruch 1, weiterhin umfassend einen Differenzverstärker (260) mit einem mit einem Ausgang des Referenz-Feldeffekttransistors verbundenen ersten Eingang und mit einem mit einem Ausgang des Mess-Feldeffekttransistors verbundenen zweiten Eingang.

4. Sensor nach Anspruch 3, wobei der Differenzverstärker drei Operationsverstärker umfasst, die als Differenzialverstärker mit einem Gleichtaktunterdrückungsverhältnis von über 50 dB konfiguriert sind.

5. Sensor nach einem der Ansprüche 1, 3 oder 4, wobei die über der unteren Gateisolatorschicht des Referenz-Feldeffekttransistors und des Mess-Feldeffekttransistors liegende obere dielektrische hydrophobe Polymerschicht ein Polyimid ist.

6. Sensor nach Anspruch 5, wobei die über der unteren Gateisolatorschicht liegende obere dielektrische Polyimidschicht ein aromatisches Polyimid ist.

7. Sensor nach einem der Ansprüche 1, 3 oder 4, wobei die über der unteren Gateisolatorschicht des Referenz-Feldeffekttransistors und des Mess-Feldeffekttransistors liegende obere hydrophobe Polymerschicht ein Polysulfon ist.

8. Sensor nach Anspruch 7, wobei die über der unteren Gateisolatorschicht des Referenz-Feldeffekttransistors und des Mess-Feldeffekttransistors liegende obere dielektrische hydrophobe Polymerschicht ein aromatisches Polysulfon ist.

9. Sensor nach Anspruch 1, wobei die über der unteren Gateisolatorschicht des Referenz-Feldeffekttransistors und des Mess-Feldeffekttransistors liegende obere dielektrische hydrophobe Polymerschicht ein vernetztes hydrophobes Polymer ist.

10. Sensor nach Anspruch 9, wobei das vernetzte hydrophobe Polymer mit einem Element vernetzt ist, ausgewählt aus einer Gruppe bestehend aus 2,2,3,3,4,4,5,5-Octafluor-1,6-hexandiol; 1,5-Pentandiol; 1,10-Decandiol und 1,4-Benzoldimethanol.

11. Sensor nach Anspruch 1, wobei das Gate, das die für Wasserdampf undurchlässige Schicht umfasst, die die obere hydrophobe Gatedielektrikumspolymerschicht des Referenz-Feldeffekttransistors bedeckt, bzw. das Gate, das die für Wasserdampf durchlässige Schicht umfasst, die die obere hydrophobe Gatedielektrikumspolymerschicht des Mess-Feldeffekttransistors bedeckt, ein Material besitzen, ausgewählt aus einer Gruppe bestehend aus Platin und Gold.

12. Sensor nach Anspruch 1, wobei
die obere Gatedielektrikumsschicht eine Konstante besitzt, die sich gemäß einer Änderung der Feuchtigkeit ändert und eine Abwesenheit von Exposition gegenüber irgendeiner Umgebung besitzt, und einen Ausgang besitzt, der einen Wert der Konstanten anzeigt; und wobei
die obere Gatedielektrikumsschicht eine Konstante besitzt, die sich gemäß einer Änderung der Feuchtigkeit ändert und eine Exposition gegenüber einer umgebenden Umgebung besitzt, und einen Ausgang besitzt, der einen Wert der Konstanten anzeigt.

13. Verfahren zum Konstruieren eines Feuchtigkeitssensors (10), umfassend die folgenden Schritte:
Ausbilden eines Referenz-Feldeffekttransistors (130) auf einem Substrat (100);
Ausbilden eines Mess-Feldeffekttransistors (120) auf einem Substrat, wobei der Referenz-Feldeffekttransistor (130) und der Mess-Feldeffekttransistor (120) jeweils eine Source (146, 142) und einen Drain (148, 144) umfassen;
Abscheiden von Kontaktelektroden (122, 124, 132, 134) an jeder Source und jedem Drain des Referenz-Feldeffekttransistors und des Mess-Feldeffekttransistors;
Aufwachsen einer unteren Gatedielektrikumsschicht (158), die die Source (146) und den Drain (148) des Referenz-Feldeffekttransistors (130) überbrückt und mindestens teilweise bedeckt;
Abscheiden einer unteren Gatedielektrikumsschicht (156), die die Source und den Drain des Mess-Feldeffekttransistors überbrückt und mindestens teilweise bedeckt, wobei der Referenz-Feldeffekttransistor und der Mess-Feldeffekttransistor jeweils weiterhin eine obere hydrophobe Gatedielektrikumspolymerschicht (154, 152) umfassen, ausgewählt aus einer Gruppe bestehend aus einem Polyimid und einem Polysulfon, wobei die obere hydrophobe Gatedielektrikumspolymerschicht die untere Gatedielektrikumsschicht (158, 156) bedeckt, die die Source und den Drain des jeweiligen Referenz-Feldeffekttransistors und Mess-Feldeffekttransistors überbrückt und mindestens teilweise bedeckt;
Kapseln der oberen hydrophoben Gatedielektrikumspolymerschicht des Referenz-Feldeffekttransistors mit einer feuchtigkeitsundurchlässigen Gatemetallschicht (126);
Kapseln der oberen hydrophoben Gatedielektrikumspolymerschicht (152) des Mess-Feldeffekttransistors mit einer feuchtigkeitsdurchlässigen Gatemetallschicht (128); und
Verbinden eines ersten Eingangs eines Differenzverstärkers (260) mit einem Ausgang des Referenz-Feldeffekttransistors und Verbinden eines zweiten Eingangs des Differenzverstärkers (260) mit einem Ausgang des Mess-Feldeffekttransistors, wobei der Differenzverstärker ein Gleichtaktunterdrückungsverhältnis von über 50 dB aufweist.

## Revendications

1. Capteur d'humidité (10) comprenant :
un substrat (100) ;
un transistor à effet de champ de référence (130) ; et
un transistor à effet de champ de détection (120) ; et
dans lequel :
le transistor à effet de champ de référence (130) comprend :
une source (146) formée sur le substrat ;
un drain (148) formé sur le substrat ;
une grille (126) ;
une couche de diélectrique de grille inférieure (158) qui recouvre au moins une partie de la source et au moins une partie du drain ainsi que le substrat entre celles-ci ; et
une couche de diélectrique de grille supérieure (154) d'un polymère hydrophobe qui recouvre la couche d'isolant de grille inférieure (158) ; et
dans lequel :
la couche de polymère hydrophobe du transistor à effet de champ de référence est recouverte d'une couche (126) imperméable à la vapeur d'eau ; et
la grille comprend la couche (126) imperméable à la vapeur d'eau ; et
le transistor à effet de champ de détection (120) comprend en outre :
une source (142) formée sur le substrat ;
un drain (144) formé sur le substrat ;
une grille (128) ;
une couche d'isolant de grille inférieure (156) qui recouvre au moins une partie de la source et au moins une partie du drain ainsi que le substrat entre celles-ci ; et
une couche de diélectrique de grille supérieure (152) d'un polymère hydrophobe qui recouvre la couche d'isolant de grille inférieure ; et
dans lequel :
la couche de polymère hydrophobe du transistor à effet de champ de détection est recouverte d'une couche (128) perméable à la vapeur d'eau ; et
la grille (128) comprend la couche (128) perméable à la vapeur d'eau.

2. Capteur de la revendication 1, dans lequel la couche de polymère hydrophobe supérieure recouvrant la couche d'isolant de grille inférieure du transistor à effet de champ de référence et du transistor à effet de champ de détection est le produit d'une réaction d'une polysulfone avec le bis(pinacolato)dibore et la di-tert-butylbipyridine en présence d'un catalyseur à l'iridium suivie d'une réaction avec le 4-formyl-4'-bromodiphényle en présence d'un catalyseur au palladium suivie d'une oxydation douce et d'une réticulation avec l'octofluorohexanediol.

3. Capteur de la revendication 1, comprenant en outre un amplificateur d'instrumentation (260) ayant une première entrée reliée à une sortie du transistor à effet de champ de référence et ayant une deuxième entrée reliée à une sortie du transistor à effet de champ de détection.

4. Capteur de la revendication 3, dans lequel l'amplificateur d'instrumentation comprend trois amplificateurs opérationnels configurés comme un amplificateur différentiel ayant un taux de réjection du mode commun supérieur à 50 dB.

5. Capteur de l'une quelconque des revendications 1, 3 ou 4, dans lequel la couche de polymère hydrophobe diélectrique supérieure recouvrant la couche d'isolant de grille inférieure du transistor à effet de champ de référence et du transistor à effet de champ de détection est un polyimide.

6. Capteur de la revendication 5, dans lequel la couche de polyimide diélectrique supérieure recouvrant la couche d'isolant de grille inférieure est un polyimide aromatique.

7. Capteur de l'une quelconque des revendications 1, 3 ou 4, dans lequel la couche de polymère hydrophobe supérieure recouvrant la couche d'isolant de grille inférieure du transistor à effet de champ de référence et du transistor à effet de champ de détection est une polysulfone.

8. Capteur de la revendication 7, dans lequel la couche de polymère hydrophobe diélectrique supérieure recouvrant la couche d'isolant de grille inférieure du transistor à effet de champ de référence et du transistor à effet de champ de détection est une polysulfone aromatique.

9. Capteur de la revendication 1, dans lequel la couche de polymère hydrophobe diélectrique supérieure recouvrant la couche d'isolant de grille inférieure du transistor à effet de champ de référence et du transistor à effet de champ de détection est un polymère hydrophobe réticulé.

10. Capteur de la revendication 9, dans lequel le polymère hydrophobe réticulé est réticulé avec un élément choisi dans un groupe constitué par le 2,2,3,3,4,4,5,5-octafluoro-1,6-hexanediol ; le 1,5-pentanediol ; le 1,10-décanediol ; et le 1,4-benzènediméthanol.

11. Capteur de la revendication 1, dans lequel la grille comprenant la couche imperméable à la vapeur d'eau recouvrant la couche de diélectrique de grille supérieure en polymère hydrophobe du transistor à effet de champ de référence et la grille comprenant la couche perméable à la vapeur d'eau recouvrant la couche de diélectrique de grille supérieure en polymère hydrophobe du transistor à effet de champ de détection, respectivement, ont un matériau choisi dans un groupe constitué par le platine et l'or.

12. Capteur de la revendication 1 dans lequel
la couche de diélectrique de grille supérieure a une constante qui varie en fonction d'une variation d'humidité et a une absence d'exposition à un quelconque environnement, et a une sortie qui indique une valeur de la constante ; et dans lequel
la couche de diélectrique de grille supérieure a une constante qui varie en fonction d'une variation d'humidité et a une exposition à un environnement ambiant, et a une sortie qui indique une valeur de la constante.

13. Procédé de construction d'un capteur d'humidité (10) comprenant les étapes consistant à :
former un transistor à effet de champ de référence (130) sur un substrat (100) ;
former un transistor à effet de champ de détection (120) sur un substrat, le transistor à effet de champ de référence (130) et le transistor à effet de champ de détection (120) comprenant chacun une source (146, 142) et un drain (148, 144) ;
déposer des électrodes de contact (122, 124, 132, 134) pour chaque source et chaque drain du transistor à effet de champ de référence et du transistor à effet de champ de détection ;
faire croître une couche de diélectrique de grille inférieure (158) qui ponte et recouvre au moins partiellement la source (146) et le drain (148) du transistor à effet de champ de référence (130) ;
déposer une couche de diélectrique de grille inférieure (156) qui ponte et recouvre au moins partiellement la source et le drain du transistor à effet de champ de détection,
le transistor à effet de champ de référence et le transistor à effet de champ de détection comprenant en outre chacun une couche de diélectrique de grille supérieure en polymère hydrophobe (154, 152) choisie dans un groupe constitué par un polyimide et une polysulfone, la couche de diélectrique de grille supérieure en polymère hydrophobe recouvrant la couche de diélectrique de grille inférieure (158, 156) qui ponte et recouvre au moins partiellement la source et le drain du transistor à effet de champ de référence et du transistor à effet de champ de détection, respectivement ;
encapsuler la couche de diélectrique de grille supérieure en polymère hydrophobe du transistor à effet de champ de référence avec une couche métallique de grille imperméable à l'humidité (126) ;
encapsuler la couche de diélectrique de grille supérieure en polymère hydrophobe (152) du transistor à effet de champ de détection avec une couche métallique de grille perméable à l'humidité (128) ; et
relier une première entrée d'un amplificateur d'instrumentation (260) à une sortie du transistor à effet de champ de référence et relier une deuxième entrée de l'amplificateur d'instrumentation (260) à une sortie du transistor à effet de champ de détection, l'amplificateur d'instrumentation ayant un taux de réjection du mode commun supérieur à 50 dB.
